# EUROPEAN PATENT APPLICATION

(11) **EP 0 585 833 A1**
(43) Date of publication of application: **09.03.1994**
(21) Application number: 93113729.3
(22) Date of filing: 27.08.1993
(51) Int. Cl.: H04N 7/167

(54) **Video signal decoder system**

(30) Priority: 04.09.1992 FI 923980
(71) Applicant: NOKIA TECHNOLOGY GmbH, D-75175 Pforzheim (DE)
(72) Inventor: Heikkinen, Ari, SF-24260 Salo (FI); Kangas, Mauri, SF-21530 Paimio (FI); Raussi, Juha, SF-24280 Salo (FI); Hiltunen, Reino, SF-24280 Salo (FI)

(57) **Abstract**

The invention relates to a video signal decoder system, in which the decoder (BASE) comprises decrypting means (2) which provide the decryption key and authorization data (14) to the picture generating means (4), which generates a decrypted television picture based on the received key and authorization data (14). The system further comprises a smart card interface (3, 5), whereby a smart card (SC) can be connected to the decoder (BASE), the smart card containing encryption means (6). The decoder (BASE) can obtain key and authorization data (21) from the smart card (SC) when it is connected to the decoder, whereby the the decryption means (6) of the smart card supplies the key and authorization data (21) through the smart card interface (3, 5) to the picture generating means (4) of the decoder (BASE).

## Description

The present invention relates to a video signal decoder system, in which the decoder comprises decrypting means which provide the decryption key and authorization data to the picture generating means, which generate a decrypted television picture based on the received key and authorization data.

For pay-television transmissions it is important to be able to encrypt the video signal well enough to prevent illegal viewing of pay-television transmissions. The decryption requires key and authorization data, and often the decoder does not necessarily know in which order the transmitted lines are (if the encryption uses line shuffling), whereby the decoder must obtain this key information from somewhere. In order to prevent illegal decryption the secret key and authorization data must be transmitted and kept in a secure way.

The most usual implementation is that secret data, such as the decryption algorithm, are stored in the memory of the decoder, whereby it is able to decrypt the received signal. This is an optimal solution regarding the costs. The need for data transmission will be minimal when the decoder memory already contyains all data which must be kept secret. However, then the encryption system will be easy to examine, and if the decryption system is broken, then there are no means left to the system owner to protect himself against illegal viewing.

A known way to store the decryption data is also to put the data on a smart card, from which the decoder obtains the required key and authorization data, whereby the decoder operates only when the smart card is inserted in its place. The smart card enables the production of equipment without an identity, and an easy replacement of the encryption system's critical data. However, a smart card is quite expensive and an infrastructure is required to supply and authorize the cards, and thus this causes unnecessary card shipment costs also for basic services. There is furthermore always a theoretical possibility to break the data transmission code by examining the smart card interface.

The object of the present invention is to provide a flexible and secure video signal decoder system, which operates independently without a smart card, and which is flexible enabling extra facilities, such as the viewing of certain single pay-programs, and its encryption algorithm can be replaced, when it is observed that somebody was able to brake the used encryption algorithm. This is possible by realizing a decoder system, in which the secret key and authorization, data at least in the beginning, are kept in the decoder memory, whereby a minimum data transmission need is obtained. The decoder moreover has a smart card interface, whereby the use of a smart card can be allowed when required. A smart card can be used as money or a prepaid card containing authorization and key data, e.g. to view extra pay-programs during a certain time.

The system presented in the introduction of the application is characterized in that it further comprises a smart card interface, whereby a smart card can be connected to the decoder, the smart card containing encryption means, and whereby the decoder can obtain key and authorization data from the smart card when it is connected to the decoder, whereby the decryption means of the smart card supplies the key and authorization data through the smart card interface to the picture generating means of the decoder.

The invention enables partial use of the smart card, whereby the basic services can be sold according to the internal system of the decoder, and the smart card can be used in selling special services, whereby the costs caused by the smart card can be limited, compared to a system operating entirely with a smart card, and the costs can be better directed to the paying target group. Because the decoder operates fully without a smart card, no smart card is required during the first phases of the decoder system's lifetime. When the services are extended, the smart card can be controllable used as needed, e.g. during sales campaigns and during certain program campaigns. The use of the smart card can also controllable be barred, so that if it seems that somebody has succeeded in breaking the encryption algorithm by examining the smart card interface, then the use of the smart card can easily be barred and still the basic services can be handled without the smart card. Correspondingly, if the protection of the basic system is broken, we can change the structure of the whole encryption algorithm and the encryption system and take into use a new smart card containing the key and authorization data of the new encryption algorithm and encryption system.

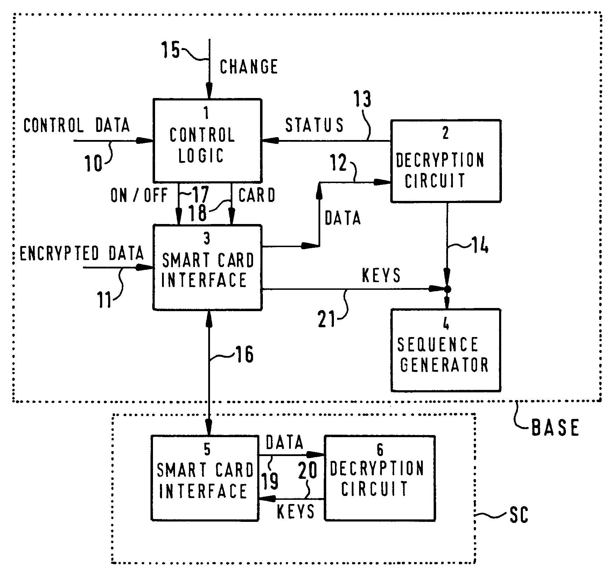

The invention is described in detail below with reference to the enclosed figure, which as a block diagram shows an embodiment of the decoder according to the invention.

The figure shows the base block BASE of the decoder and the contents of the smart card SC as well as its connection to the decoder BASE. The use of the smart card SC is enabled by sending a control instruction through the control data 10, which can control the control logic 1 On/off-output 17 on or off. In the basic operation the use of the smart card SC is barred, whereby the On/off-output 17 of the control logic is off, and connecting the smart card to the decoder causes no activities. The smart card interface 3 of the base device directs the encrypted data 11 to the decryption circuit 2 of the base device, which then controls the sequence generator 4 in accordance with the received data 12 and authorization 12. If the decryption circuit 2 is able to and may open the encrypted data 11, 12, then the decryption circuit 2 supplies status data 13 to the control logic 1 and a decryption key 14 to the sequence generator 4, which according to the key generates a decrypted picture, generates for example the shuffled lines into the correct order. If the picture is encrypted by line shuffling, then the sequence generator continuously runs through the picture, or circulates the shuffled lines and in accordance with the decryption key it extracts the lines to the decoder output in a correct order for the television set.

If the use of the smart card is allowed (or the control logic's On/off-output 17 is in the on-state), then immediately after the control logic 1 receives the Change data 15 it supplies the data further to the decryption circuit 2 of the base device. The control logic 1 waits a predefined time for the status data 13, and when the status data 13 is set as an indication that the decryption circuit 2 is able to and allowed to decrypt the data 11, 12, then the selected data connection is kept. Thus the decryption circuit 2 of the base device can be taken into use, and the services bought for the base device can be utilized.

If the status data 13 is not set, this is an indication that the decryption circuit 2 is not able to or not allowed to decrypt the data 11, 12, and then the control logic 1 controls the encrypted data to the smart card SC by setting the status of the Card-output 18 of the control logic. The data transmission 16 between the smart card SC and the base device BASE is structured two-way traffic. The control of the data transmission 16 is divided between the smart card interface 3 of the base device and the smart card interface 5 of the smart card. The smart card interfaces 3, 5 control the encrypted data 11, 19 to the decryption circuit 6 of the smart card SC, whereby the decryption circuit returns the decryption keys 20 to the base device BASE. If the decryption circuit 6 is able to and allowed to decrypt the encrypted data 11, 19, then the sequence generator 4 obtains, appropriate to the situation, the correct key 21 through the smart card interfaces 3, 5.

In order for the base device to be able to decrypt data 11, the base device decryption circuit 2 and the smart card decryption circuit 6 must use the same algorithm. If somebody breaks the algorithm of the base device, the smart card SC can use a new algorithm, unknown to the base device, whereby the decryption circuit 2 of the base device never can decrypt the encrypted data 11, but the decryption can be done only by the smart card SC.

In the system according to the present invention it is possible to utilize the smart card in several different ways, and it is possible to freely choose the way it is used independently of the base device operation. Thus the smart card can be used in several different ways to enable the viewing of a pay-program for a certain time, whereby it is usually prepaid. The communication between the smart card and the base device must be specified, but this specification does not bind to make any such basic choices, on the basis of which it would be possible to illegally unravel the encryption by examining the smart card interface. Thus one limitation of the system is that it must operate according to a defined communication method, which however does not limit the functions implemented by the smart card.

## Claims

1. A video signal decoder system, in which the decoder (BASE) comprises decrypting means (2) which provide the decryption key and authorization data (14) to the picture generating means (4), which generates a decrypted television picture based on the received key and authorization data (14), **characterized** in that it further comprises a smart card interface (3, 5), whereby a smart card (SC) can be connected to the decoder (BASE), the smart card containing encryption means (6), and whereby the decoder (BASE) can obtain key and authorization data (21) from the smart card (SC) when it is connected to the decoder, whereby the the decryption means (6) of the smart card supplies the key and authorization data (21) through the smart card interface (3, 5) to the picture generating means (4) of the decoder (BASE).

2. System according to claim 1, **characterized** in that it comprises a control logic (1), which on the basis of its control data input (10) either allows or bars the use of the smart card by supplying as its On/off-output (17) to the smart card interface (3) an instruction to go on or off, respectively.

3. System according to claim 1, **characterized** in that the encrypted data (11) is supplied to the decoder's smart card interface (3), from where the data is supplied to the decoder's decryption means (2), and
- if the decryption means (2) supplies to the control logic (1) an indication that it is able to decrypt, then the data connection is kept and the decoder's decryption means (2) supply to the picture generating means (4) the required key and authorization data (14),
- otherwise the encrypted data (11) is supplied through the smart card interface (3, 5) to the smart card's decryption means (6), which supplies the required key and authorization data (21) to the picture generating means (4).
